# FASCICULE DE BREVET EUROPEEN

(11) **EP 4 679 772 B1**
(45) Date de publication et mention de la délivrance du brevet: **09.09.2026**
(21) Numéro de dépôt: 25187725.4
(22) Date de dépôt: 07.07.2025
(51) Int. Cl.: H04L 9/40, G06F 21/64, H04L 9/32, H04L 67/12

(54) **PROCÉDÉ ET SYSTÈME DE RÉPONSE SÉCURISÉE À UNE COMMANDE AUPRÈS D'UN COMPTEUR INTELLIGENT**
VERFAHREN UND SYSTEM ZUR SICHEREN REAKTION AUF EINE STEUERUNG EINES INTELLIGENTEN ZÄHLERS
METHOD AND SYSTEM FOR SECURELY RESPONDING TO A COMMAND FROM A SMART METER

(30) Priorité: 08.07.2024 FR 2407439
(43) Date de publication de la demande: 14.01.2026
(73) Titulaire: SAGEMCOM ENERGY & TELECOM SAS, 92270 Bois-Colombes (FR)
(72) Inventeur: ROTER, Ziv, 92270 BOIS-COLOMBES (FR)
(74) Mandataire: Cabinet Le Guen Maillet

(56) Documents cités:
- CN-A- 102 685 114
- US-A1- 2012 137 126

## Description

### DOMAINE TECHNIQUE

Au moins un mode de réalisation concerne un procédé et un système de réponse sécurisée à une commande adressée à un compteur intelligent. Le système en question est adapté pour permettre à un dispositif gestionnaire d'assurer que des réponses à des commandes transmises à un compteur intelligent ne soit pas manipulées en chemin et de connaître avec certitudes quelles opérations ont été réalisées par le compteur intelligent sur réception des commandes.

### ETAT DE LA TECHNIQUE ANTERIEURE

Il est connu des compteurs intelligents (« smart meters » en anglais), de type compteurs électriques (compteurs de consommations électriques) ou compteurs de fluides (compteurs de consommation de fluides), qui comprennent des interfaces de communication permettant à un système de gestion automatisée d'effectuer une collecte à distance de données de consommation. Par exemple, des compteurs électriques intelligents comportent une interface de communication de type Courants Porteurs en Ligne CPL (ou PLC, pour « Powerline Communications » en anglais). Des échanges peuvent ainsi être réalisés entre les compteurs intelligents et un système d'information IS (« Information System » en anglais) les gérant de manière centralisée. Cela permet au système d'information IS d'envoyer des commandes aux compteurs intelligents pour leur faire réaliser diverses opérations, comme des opérations de transmission de relevés de comptage, des opérations de changement de paramètres opérationnels (par exemple, un changement de seuil bas de surconsommation énergétique ou un changement de profil calendaire), des opérations de mise à jour logicielle, des opérations d'effacement de journaux d'événements, des opérations d'activation / désactivation de fonctionnalités (par exemple, coupure d'alimentation), etc.

De manière à se prémunir d'une altération d'attributs de commandes, les spécifications COSEM (« Companion Specification for Energy Metering » anglais) imposent que certaines commandes soient uniquement acceptées si elles utilisent un objet COSEM de protection de données (objet appelé *« DATA PROTECTION »,* comme par exemple repris dans l'ouvrage *« Bluebook DLMS »* V16 partie 2 §4.4.9) qui apposent une signature (chiffrement asymétrique) sur des résultats d'exécution de commandes (attributs de sortie), et sur des métadonnées associées (numéro de transaction, date de la commande, identité cryptographique du signataire, identité cryptographique du destinataire). Pour rappel, les spécifications COSEM définissent un modèle sous forme d'objets pour formaliser des instructions (commandes) et plus généralement des échanges de données. Les objets sont combinables de manière à permettre de réaliser tout un panel d'opérations, qu'elles soient simples, telles que des lectures de registres, ou plus complexes, telles que des opérations de gestion de charge. Les spécifications COSEM sont suffisamment génériques pour permettre de modéliser divers cas d'utilisation au-delà de la gestion de l'énergie (gestion de la distribution d'eau, par exemple).

La protection des attributs de sortie, et des métadonnées associées, notamment permise par les spécifications COSEM grâce à l'objet de type *« DATA PROTECTION »* est un outil important de sécurisation des transmissions de réponses à des commandes transmises par un dispositif gestionnaire dans un système de gestion automatisée (à distance) de compteurs intelligents. Cela empêche que des réponses altérées ne soient prises en compte par le dispositif gestionnaire.

Cependant, la sécurisation de la transmission de réponses par protection des attributs de sortie est une solution imparfaite. En effet, diverses commandes peuvent retourner des attributs de sortie similaires, de par leurs formes, leurs tailles... Et la protection des attributs de sortie offerte par l'objet de type « *DATA PROTECTION »* est sans effet contre une altération de la commande elle-même, typiquement une altération d'identifiant de commande. Par exemple, si l'opération souhaitée par le dispositif gestionnaire concerne une lecture d'un registre de 32 bits et que le compteur intelligent retourne la valeur d'un autre registre de 32 bits à cause d'une commande altérée, le dispositif gestionnaire peut interpréter de manière erronée l'état opérationnel du compteur intelligent.

Il est alors souhaitable de fournir une solution qui permette de renforcer la sécurisation des réponses à des commandes transmises dans un système de gestion automatisée à distance depuis un dispositif gestionnaire vers des compteurs intelligents, de sorte à ne pas prendre en compte des informations fournies par les compteurs intelligents et qui ne correspondraient pas effectivement aux commandes initialement transmises.

État de la technique : CN 102 685 114 A (ELEC POWER RES INST GUANGDONG ; UNIV SUN YAT SEN) 19 septembre 2012, divulgue un système de cryptage basé sur l'identité pour le transfert de données, dispose d'une clé privée qui est fournie pour décrypter le texte chiffré et pour générer des instructions de commande du compteur d'énergie électrique intelligent par clé de travail; US 2012/137126 A1 (MATSUOKA Kazunari [JP] et Al) 31 mai 2012, divulgue un compteur intelligent de système de lecture de compteur utilisé pour un système de distribution d'électricité, a un processeur sécurisé qui décrypte les données de lecture de compteur cryptées avec une clé secrète, et stocke les données de lecture de compteur décryptées ou cryptées dans un dispositif de stockage non volatile.

### EXPOSE DE L'INVENTION

A cet effet, il proposé un procédé de transmission d'une réponse à une commande reçue par un compteur intelligent dans un système de gestion automatisée, la commande comportant un descripteur d'une opération à réaliser par ledit compteur intelligent, le procédé comportant les étapes suivantes exécutées par ledit compteur intelligent, après réalisation de l'opération commandée, pour fournir la réponse à la commande reçue :
- récupérer des attributs de sortie, et des métadonnées associées à la réponse, à fournir en résultats d'exécution de la commande reçue ;
- inclure, dans les métadonnées associées à la réponse, le descripteur d'opération à réaliser qui avait été fourni dans la commande reçue ;
- réaliser une sécurisation qui génère une signature sur un ensemble de données formé par les attributs de sortie et les métadonnées associées à la réponse ;
- transmettre, en réponse à la commande reçue, la réponse incluant les attributs de sortie, lesdites métadonnées associées incluant le descripteur d'opération à réaliser qui avait été fourni dans la commande reçue, et la signature générée.

Ainsi, grâce à la présence dans les métadonnées associées à la réponse du descripteur d'opération à réaliser qui avait été fourni dans la commande reçue, ainsi que de la signature il est possible de savoir quelle opération a été effectivement réalisée par le compteur intelligent et si une altération de la commande et/ou de la réponse est intervenue, de pouvoir le détecter. Il est ainsi possible de ne pas prendre en compte des informations fournies par les compteurs intelligents et qui ne correspondraient pas effectivement aux commandes qui leur ont été initialement transmises.

Selon un mode de réalisation particulier, la commande inclut en outre des métadonnées associées à la commande, incluant une copie du descripteur d'opération à réaliser, le compteur intelligent vérifie que le descripteur de l'opération à réaliser et sa copie dans les métadonnées associées à la commande reçue sont identiques, et lorsque tel n'est pas le cas, le compteur intelligent rejette la commande reçue.

Ainsi, la commande est sécurisée, ce qui évite que le compteur intelligent réalise une opération qui ne correspondrait pas à la commande initialement transmise.

Selon un mode de réalisation particulier, le compteur intelligent construit les métadonnées associées à la réponse en recopiant les métadonnées associées à la commande reçue.

Ainsi, le compteur intelligent peut aisément indiquer, en réponse à la commande, quelle opération a été effectuée.

Selon un mode de réalisation particulier, le descripteur d'opération à réaliser contient un identifiant de l'opération à réaliser.

Ainsi, bien qu'un simple identifiant d'opération à réaliser pourrait aisément subir une altération, la copie astucieuse du descripteur de l'opération à réaliser au sein de métadonnées qui bénéficient d'une protection par signature est suffisante pour permettre de détecter qu'une altération est survenue.

Selon un mode de réalisation particulier, la gestion automatisée des compteurs intelligents est opérée selon une modélisation orientée objet, le descripteur d'opération à réaliser contient un identifiant de classe d'au moins un objet manipulé pour réaliser l'opération en question.

Ainsi, bien qu'un simple identifiant de classes d'objets manipulés pour réaliser l'opération souhaitée pourrait aisément subir une altération, la copie astucieuse du descripteur de l'opération qui était à réaliser au sein de métadonnées qui bénéficient d'une protection par signature est suffisante pour permettre de détecter qu'une altération est survenue.

Selon un mode de réalisation particulier, la modélisation orientée objet est de type COSEM et la sécurisation qui génère la signature est obtenue par un objet de type DATA PROTECTION.

Ainsi, la copie astucieuse du descripteur de l'opération qui était à réaliser, dans les métadonnées de la réponse, permet d'assurer la sécurisation recherchée dans le cadre d'une utilisation d'objet COSEM de type DATA PROTECTION.

Selon un mode de réalisation particulier, le procédé comporte en outre les étapes suivantes, sur réception de la réponse, de vérification de la réponse exécutées par un dispositif gestionnaire qui a transmis la commande audit compteur intelligent :
- récupérer, dans la réponse reçue, les attributs de sortie qui résultent de l'opération réalisée, ainsi que les métadonnées associées à la réponse ;
- récupérer en mémoire le descripteur d'opération à réaliser qui avait été transmis dans la commande à laquelle la réponse correspond ;
- vérifier que les métadonnées récupérées dans la réponse correspondent au descripteur d'opération à réaliser récupéré en mémoire, et lorsque tel n'est pas le cas, rejeter la réponse ;
- récupérer la signature, dans la réponse reçue, et vérifier que la signature est conforme avec les attributs de sortie et les métadonnées associées à la réponse, qui ont été récupérés dans la réponse, et lorsque tel n'est pas le cas, rejeter la réponse, et sinon, accepter la réponse.

Ainsi, le dispositif gestionnaire est apte à détecter si une altération est survenue dans la commande (mauvaise commande exécutée par le compteur intelligent) et/ou dans la réponse.

Selon un mode de réalisation particulier, la vérification de la réponse est aussi exécutée par un concentrateur de données agissant comme relais entre le dispositif gestionnaire et le compteur intelligent en question dans le système de gestion automatisée.

Ainsi, il est vérifié que la commande n'a pas été altérée depuis le compteur intelligent jusqu'au concentrateur de données, et si tel a été le cas, cette vérification évite de solliciter inutilement le dispositif gestionnaire (et des ressources réseau entre le concentrateur de données et le dispositive gestionnaire).

Il est également proposé un compteur intelligent configuré pour traiter une commande reçue dans un système de gestion automatisée, la commande reçue comportant un descripteur d'une opération à réaliser par le compteur intelligent. Le compteur intelligent comporte de la circuiterie électronique configurée pour exécuter les étapes suivantes, après réalisation de l'opération commandée, pour fournir la réponse à la commande reçue :
- récupérer des attributs de sortie, et des métadonnées associées à la réponse, à fournir en résultats d'exécution de la commande reçue ;
- inclure, dans les métadonnées associées à la réponse, le descripteur d'opération à réaliser qui avait été fourni dans la commande reçue ;
- réaliser une sécurisation qui génère une signature sur un ensemble de données formé par les attributs de sortie et les métadonnées associées à la réponse ;
- transmettre, en réponse à la commande reçue, la réponse incluant les attributs de sortie, lesdites métadonnées associées incluant le descripteur d'opération à réaliser qui avait été fourni dans la commande reçue, et la signature générée.

Il est également proposé ici un dispositif gestionnaire comportant de la circuiterie électronique configurée pour effectuer une transmission d'une commande dans un système de gestion automatisée, la commande comportant un descripteur d'opération à réaliser par un compteur intelligent, la circuiterie électronique étant configurée pour exécuter les étapes suivantes, sur réception de la réponse, de vérification de la réponse :
- récupérer, dans la réponse reçue, des attributs de sortie qui résultent d'une opération réalisée par le compteur intelligent sur réception de la commande, ainsi que les métadonnées associées à la réponse ;
- récupérer en mémoire le descripteur d'opération à réaliser qui avait été initialement transmis dans la commande ;
- vérifier que les métadonnées récupérées dans la réponse correspondent au descripteur d'opération à réaliser récupéré en mémoire, et lorsque tel n'est pas le cas, rejeter la réponse ;
- récupérer la signature, dans la réponse reçue, et vérifier que la signature est conforme avec les attributs de sortie et les métadonnées associées à la réponse, qui ont été récupérés dans la réponse, et lorsque tel n'est pas le cas, rejeter la réponse, et sinon, accepter la réponse.

Il est également proposé ici un système de gestion automatisée de compteurs intelligents comportant un dispositif gestionnaire tel qu'exposé ci-dessus et des compteurs intelligents tels qu'exposés ci-dessus.

Il est également proposé ici un procédé implémenté par un dispositif gestionnaire dans un système de gestion automatisée, dans lequel le dispositif gestionnaire effectue une transmission d'une commande comportant un descripteur d'opération à réaliser par un compteur intelligent. Le procédé est tel que le dispositif gestionnaire exécute les étapes suivantes, sur réception d'une réponse à la commande :
- récupérer, dans la réponse reçue, des attributs de sortie qui résultent d'une opération réalisée par le compteur intelligent sur réception de la commande, ainsi que les métadonnées associées à la réponse ;
- récupérer en mémoire le descripteur d'opération à réaliser qui avait été initialement transmis dans la commande ;
- vérifier que les métadonnées récupérées dans la réponse correspondent au descripteur d'opération à réaliser récupéré en mémoire, et lorsque tel n'est pas le cas, rejeter la réponse ;
- récupérer la signature, dans la réponse reçue, et vérifier que la signature est conforme avec les attributs de sortie et les métadonnées associées à la réponse, qui ont été récupérés dans la réponse, et lorsque tel n'est pas le cas, rejeter la réponse, et sinon, accepter la réponse.

Il est également proposé ici un produit programme d'ordinateur comportant des instructions entraînant l'implémentation par un processeur de l'un ou l'autre des procédés exposés ci-dessus, dans l'un quelconque de leurs modes de réalisation, lorsque les instructions sont exécutées par le processeur.

Il est également proposé ici un support de stockage d'informations stockant des instructions entraînant l'implémentation par un processeur de l'un ou l'autre des procédés exposés ci-dessus, dans l'un quelconque de leurs modes de réalisation, lorsque les instructions sont lues depuis le support de stockage d'informations et exécutées par le processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de gestion automatisée pour compteurs intelligents ;
[Fig. 2] montre une représentation logique d'interactions entre un dispositif gestionnaire et un compteur intelligent du système de gestion automatisée ;
[Fig. 3] illustre schématiquement un exemple d'architecture matérielle, qui est adapté pour implémenter un dispositif du système de gestion automatisée ;
[Fig. 4] illustre schématiquement un principe de génération et apposition de signature ;
[Fig. 5] illustre schématiquement un organigramme d'un procédé de formatage et de transmission d'une commande initiée par le dispositif gestionnaire et à destination du compteur intelligent, dans un mode de réalisation particulier ;
[Fig. 6] illustre schématiquement un organigramme d'un procédé de vérification pour acception ou rejet d'une commande reçue, dans un mode de réalisation particulier ;
[Fig. 7] illustre schématiquement un organigramme d'un procédé de formatage et de transmission d'une réponse à une commande qui a été initiée par le dispositif gestionnaire à destination du compteur intelligent ; et
[Fig. 8] illustre schématiquement un organigramme d'un procédé de vérification pour acception ou rejet d'une réponse reçue.

### EXPOSE DETAILLE DE MODES DE REALISATION

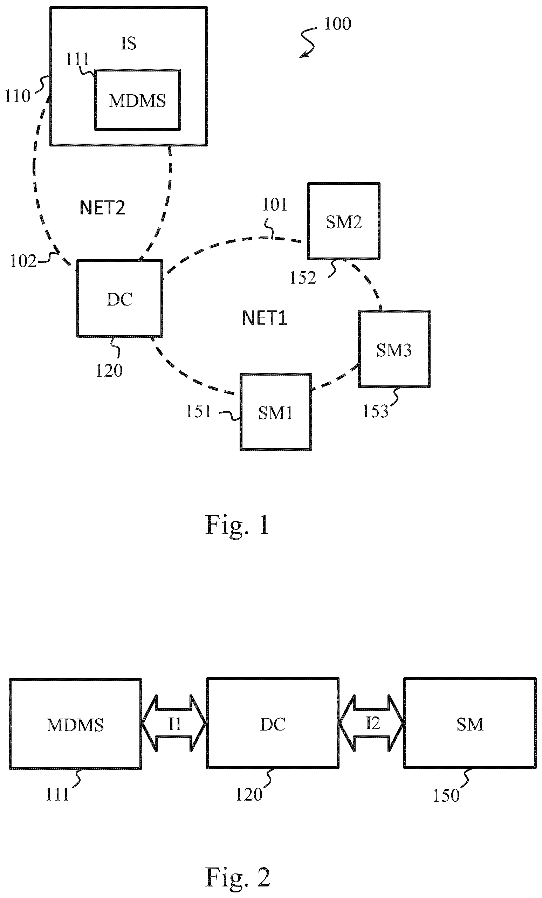

La Fig. 1 illustre schématiquement un système de gestion automatisée 100 dans lequel la présente invention peut être implémentée. Le système de gestion automatisée 100 est configuré pour réaliser une gestion à distance de compteurs intelligents 151, 152, 153 (*e.g.,* électricité, eau, gaz, chaleur, autres fluides).

La gestion à distance des compteurs intelligents 151, 152, 153 est assurée par un dispositif gestionnaire 111 d'un système d'information IS (« Information System » en anglais) 110. Dans de nombreuses solutions de tels systèmes de gestion automatisée, le dispositif gestionnaire 111 est un système de gestion de données de compteurs MDMS (« Meter Data Management System » en anglais).

Le système d'information 110 inclut typiquement en outre un système de gestion de clefs KMS (« Key Management System » en anglais), qui est configuré pour stocker des clefs de chiffrement nécessaires aux compteurs intelligents qui dépendent du système d'information IS 110 en question. Le système de gestion de clefs KMS est configuré pour fournir au dispositif gestionnaire 111, tel que le système de gestion de données de compteurs MDMS, les clefs nécessaires aux chiffrements/déchiffrements devant être effectués vis-à-vis des compteurs intelligents 151, 152, 153. En variante, le dispositif gestionnaire 111 dispose, par configuration préalable, des clefs nécessaires aux chiffrements/déchiffrements devant être effectués vis-à-vis des compteurs intelligents 151, 152, 153.

Le dispositif gestionnaire 111 réalise la gestion des compteurs intelligents 151, 52, 153 à travers une infrastructure réseau gérée par un concentrateur de données DC (« Data Concentrateur » en anglais) 120. Le concentrateur de données DC 120 gère ainsi un premier réseau de communication NET1 101 via lequel les communications avec les compteurs intelligents 151, 152, 153 sont établies. Le concentrateur de données DC 120 sert ainsi de relais entre les compteurs intelligents 151, 152, 153 et le système d'information IS 110 (y compris le dispositif gestionnaire 111).

Comme schématiquement illustré sur la Fig. 1, le concentrateur de données DC 120 est externe au système d'information IS 110 et communique avec le système d'information IS, (y compris le dispositif gestionnaire 111) grâce à un deuxième réseau de communication NET2 102.

Typiquement, le système d'information IS 110 interagit avec plusieurs concentrateurs de données DC 120 au travers du deuxième réseau de communication NET2 102, chacun des concentrateurs de données DC 120 gérant les communications avec son propre groupe de compteurs intelligents.

Par exemple, le premier réseau de communication NET1 101 est un réseau de type courants porteurs en ligne PLC (« PowerLine Communications » en anglais), tel que conforme aux spécifications G3-PLC ou PRIME. Selon un autre exemple, le premier réseau de communication NET1 101 est un réseau sans-fil de type LPWAN (« Low-Power Wide Area network » en anglais) tel qu'on le trouve dans l'internet des objets IoT (« Internet of Things » en anglais).

Par exemple, le deuxième réseau de communication NET2 102 est un réseau de communication sans-fil de type 5G (5^{e} Génération). Selon d'autres exemples, le réseau de communication NET2 102 est un réseau de communication sans-fil de type GPRS (« General Packet Radio Service » en anglais), UMTS (« Universal Mobile Telecommunication System » en anglais) ou LTE (« Long-Term Evolution » en anglais).

D'autres technologies peuvent être utilisées pour réaliser le premier réseau de communication NET1 101 et le deuxième réseau de communication NET2 102.

Une représentation logique des interactions entre le dispositif gestionnaire 111, tel que le système MDMS, et un dit compteur intelligent 150 par l'intermédiaire du concentrateur de données DC 120, est montrée sur la **Fig. 2****.** Ces trois éléments peuvent être de fournisseurs (constructeurs) différents et sont typiquement localisés à des endroits différents.

Une interface I1 est définie pour les échanges entre le dispositif gestionnaire 111 et le concentrateur de données DC 120, et une interface I2 est définie pour le concentrateur de données DC 120 et le compteur intelligent 150.

Dans une implémentation DLMS (« Device Language Message Specifications » en anglais), le dispositif gestionnaire 111 a un rôle de dispositif tiers (ou tierce partie) au regard de la paire client DLMS - serveur DLMS formée par respectivement le concentrateur de données DC 120 et le compteur intelligent 150.

L'interface I1 permet alors à la tierce partie de donner des ordres au client DLMS et d'en récupérer les résultats. Ces ordres sont typiquement dans un format propriétaire (par exemple basé sur XML (« eXtensible Markup Language » en anglais), JSON (« JavaScript Object Notation » en anglais) ou autre) dans un protocole de transport applicatif sécurisé, type HTTPS (« Hypertext Transfer Protocol Secure » en anglais) mais manipule des commandes et des données métier au format COSEM / A-XDR (où A-XDR est un format d'encodage, référencé par les spécifications DLMS/COSEM, et défini dans la norme IEC 61334-6).

L'interface I2 permet au client DLMS de se connecter au compteur / serveur DLMS, d'envoyer des ordres et de récupérer les résultats en utilisant le protocole DLMS pour gérer les commandes et les données métier au format COSEM / A-XDR.

Le client DLMS assure les conversions de format de transport entre les premier NET1 101 et deuxième NET2 102 réseaux de communication. Notamment, une couche de sécurisation par chiffrement symétrique peut être ajoutée pour les transmissions sur le premier réseau de communication NET1 101.

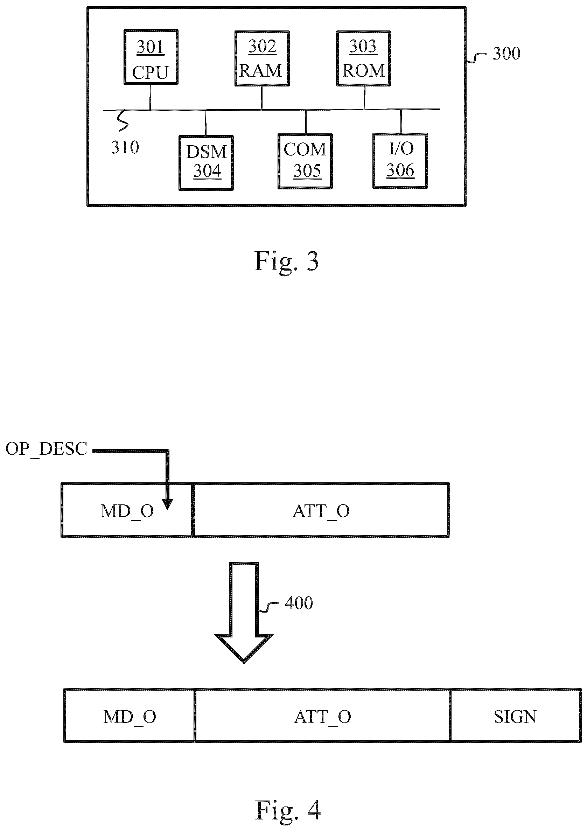

Pour assurer l'intégrité des réponses transmises par le compteur intelligent 150 à des commandes transmises par le dispositif gestionnaire 111, une génération et apposition de signature est réalisée comme détaillé ci-après en relation avec la Fig. 4, par exemple par le biais d'un objet COSEM de type *« DATA PROTECTION ».*

La **Fig. 3** illustre schématiquement un exemple d'architecture matérielle 300, qui est adapté pour implémenter tout contrôleur de dispositif du système de gestion automatisée 100. L'exemple d'architecture matérielle est ainsi adapté pour implémenter un contrôleur du système d'information IS 110, ou de toute composante du système d'information IS 110. L'exemple d'architecture matérielle est aussi adapté pour implémenter un contrôleur du concentrateur de données DC 120. L'exemple d'architecture matérielle est aussi adapté pour implémenter un contrôleur de compteur intelligent 150, 151, 152, 153.

L'architecture matérielle 300 comprend alors, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, ou EEPROM (« Electrically Erasable Programmable ROM » en anglais), ou une mémoire de type Flash ; un support de stockage de données DSM (« Data Storage Medium » en anglais) 304, tel qu'un disque dur HDD (« Hard Disk Drive » en anglais), ou un lecteur de support de stockage, tel qu'un lecteur de cartes SD (« Secure Digital » en anglais) ; et au moins une interface de communication COM 305. Selon le dispositif considéré, l'architecture matérielle 300 peut en outre comprendre des entrées/sorties (« Inputs / Outputs en anglais) I/O 306, par exemple pour effectuer des mesures de consommation (compteurs intelligents).

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'architecture matérielle 300 est mise sous tension, le processeur 301 est capable de lire de la RAM 302 des instructions et de les exécuter. Ces instructions forment un programme d'ordinateur causant la mise en œuvre, par le processeur 301, des étapes et algorithmes décrits ici en relation avec le dispositif concerné.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif du système de gestion automatisée 100 comprend de la circuiterie électronique agencée et configurée pour implémenter les étapes et algorithmes décrits ici en relation avec le dispositif en question.

La **Fig. 4** illustre schématiquement un principe de sécurisation de réponse à une commande par génération et apposition de signature.

Comme proposé par les spécifications COSEM, une signature est apposée par chiffrement asymétrique grâce à une clef privée sur un ensemble de données formé des attributs de sortie ATT_O, résultats d'une opération commandée, ainsi que de métadonnées MD_O associées à la réponse.

Dans les spécifications COSEM, ces métadonnées sont un numéro de transaction (métadonnées *« transaction-id* »), identité cryptographique du signataire (métadonnées « *originator-system-title* »), date de la commande (métadonnées « *date-time* »), identité cryptographique du destinataire (métadonnées « *recipient-system-title* »). D'autres métadonnées peuvent être ajoutées (métadonnées « *other-information* » existantes ou dans un champ de métadonnées « *object-list* » ajouté à cet effet). Les métadonnées sont typiquement d'abord fournies (métadonnées MD_I), au moins en partie, dans la commande et sont donc des données qui ne sont pas nécessaires pour réaliser l'opération elle-même, puisque les données nécessaires pour réaliser l'opération elle-même se trouvent ailleurs dans la commande, mais qui fournissent des informations complémentaires.

L'opération à réaliser est présentée dans la commande dans un descripteur OP_DESC (e.g. objet(s) COSEM). Comme décrit ci-après, dans un mode de réalisation particulier, une copie de ce descripteur OP_DESC est incluse dans les métadonnées MD_I (plus particulièrement dans les métadonnées « *other-information* » existantes ou via l'ajout d'un nouveau champ de métadonnées « *object-list* ») fournies dans la commande.

Dans un mode de réalisation particulier, le descripteur d'opération à réaliser OP_DESC et son éventuelle copie, dans la commande, contiennent un identifiant de l'opération à réaliser (par exemple, un numéro de méthode).

Dans un mode de réalisation particulier où la gestion automatisée des compteurs intelligents est opérée selon une modélisation orientée objet (comme dans les spécifications COSEM), le descripteur d'opération à réaliser OP_DESC et son éventuelle copie, dans la commande, contiennent un identifiant de classe d'au moins un objet manipulé pour réaliser l'opération en question.

Dans un mode de réalisation particulier où la gestion automatisée des compteurs intelligents est opérée selon une modélisation orientée objet (comme dans les spécifications COSEM), le descripteur d'opération à réaliser OP_DESC est une liste d'objets COSEM représentant l'opération à réaliser.

Il est proposé ici d'inclure, dans la réponse, dans les métadonnées MD_O (plus particulièrement dans les métadonnées « *other-information* » existantes ou via l'ajout d'un nouveau champ de métadonnées *« object-list »*) une copie du descripteur de l'opération qui était à réaliser OP_DESC. Cette copie du descripteur de l'opération qui était à réaliser OP_DESC, d'après la commande reçue, est ainsi incluse dans la zone de couverture de la sécurisation par signature.

Ainsi, après génération 400 d'une signature SIGN à partir des attributs de sortie ATT_O en sortie de l'opération qui était à réaliser d'après la commande reçue et des métadonnées MD_O (y compris donc la copie du descripteur d'opération qui était à réaliser OP_DESC), la signature SIGN est apposée en accompagnement des attributs de sortie ATT_O et des métadonnées MD_O. Il est alors possible de vérifier en réception de la réponse, grâce à la clef publique correspondant à la clef privée utilisée pour générer la signature, que non seulement les attributs de sortie n'ont pas été altérés mais aussi, de vérifier, grâce à la copie descripteur d'opération à réaliser OP_DESC incluse dans les métadonnées MD_O et à la signature, d'éviter que le dispositif gestionnaire se méprenne sur l'opération qui a été réalisée par le compteur intelligent 150 et donc déterminer si cette opération est conforme à celle initialement requise par le dispositif gestionnaire 111. Le dispositif gestionnaire 111 est alors apte à décider si les attributs de sortie ATT_O reçus dans la réponse peuvent être pris en compte.

Le principe de sécurisation de réponse présenté ci-dessus est avantageusement appliqué à des opérations non-critiques vis-à-vis du compteur intelligent, plus particulièrement des opérations de lecture d'informations (*e.g.,* commandes de type « GET »). Il est toutefois important que le dispositif gestionnaire 111 puisse déterminer quelle confiance accorder aux attributs de sortie ATT_O contenus dans la réponse, et notamment si ceux-ci correspondent effectivement aux résultats d'exécution de la commande initialement transmise par le dispositif gestionnaire 111. Par exemple, dans le cadre des spécifications DLMS/COSEM, le principe de sécurisation de commande présenté ci-dessus est avantageusement appliqué dans le cadre d'une lecture d'une courbe de charge ou de journal d'événements via un objet de classe 7 *« PROFILE GENERIC ».*

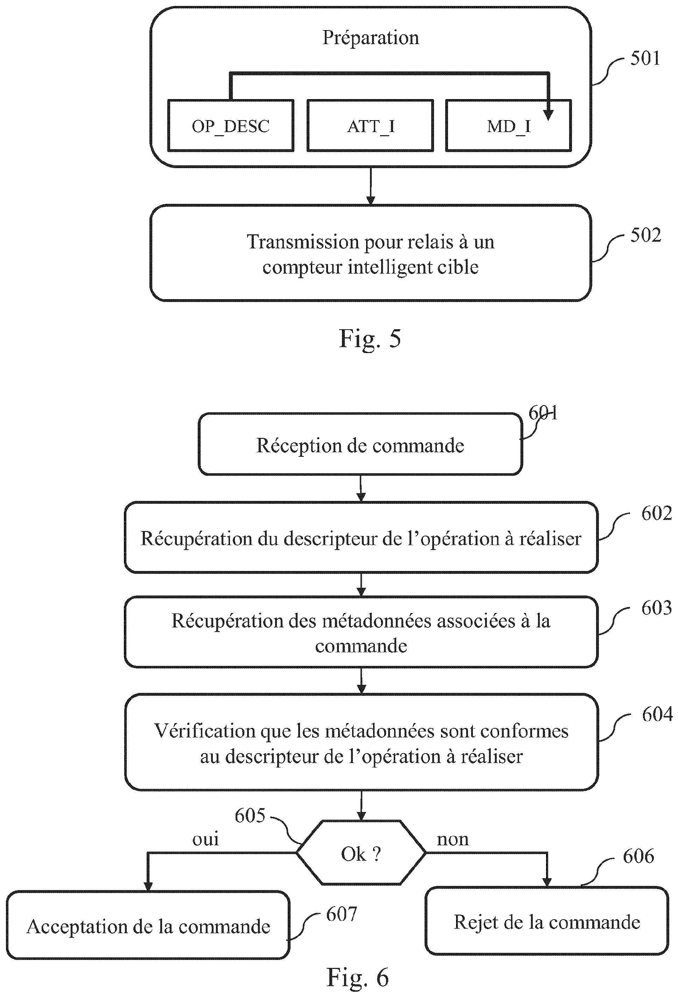

La **Fig. 5** illustre schématiquement un organigramme d'un procédé de formatage et de transmission d'une commande initiée par le dispositif gestionnaire 111 et à destination d'un dit compteur intelligent 150, dans un mode de réalisation.

Dans une étape 501, le dispositif gestionnaire 111 prépare la commande. La commande correspond à une opération à réaliser par le compteur intelligent 150 en question (compteur intelligent cible). Le dispositif gestionnaire 111 génère un descripteur d'opération à réaliser OP_DESC comme évoqué ci-dessus en relation avec la Fig. 4.

Le dispositif gestionnaire 111 prépare les métadonnées MD_I associées à la commande. Le dispositif gestionnaire 111 inclut, dans les métadonnées MD_I, une copie du descripteur d'opération à réaliser OP_DESC. Ce mode de réalisation particulier permet en réception de vérifier que le descripteur d'opération à réaliser OP_DESC n'a pas été altéré pendant la transmission (la copie correspond au descripteur d'opération à réaliser OP_DESC qui se trouve ailleurs dans la commande).

D'éventuels attributs d'entrée ATT_I peuvent être ajoutés à la commande, si la commande est d'un type qui le requiert.

Dans une étape 502, le dispositif gestionnaire 111 transmet la commande ainsi formée au concentrateur de données DC 120 pour relais jusqu'au compteur intelligent 150 en question (compteur intelligent cible).

Le dispositif gestionnaire 111 garde en mémoire le descripteur d'opération à réaliser OP_DESC tel qu'envoyé, jusqu'à ce qu'une réponse du compteur intelligent 150 en question lui parvienne (ou qu'un délai d'expiration supérieur à un seuil de durée prédéfinie soit atteint).

La **Fig. 6** illustre schématiquement un organigramme d'un procédé de vérification pour acception ou rejet d'une commande reçue, dans un mode de réalisation particulier. La commande a été générée et transmise selon le procédé décrit ci-dessus en relation avec la Fig. 5 à un dit compteur intelligent 150 (compteur intelligent cible).

Dans une étape 601, le compteur intelligent 150 en question reçoit la commande.

Dans une étape 602, le compteur intelligent 150 récupère, dans la commande reçue, (ce qui est supposé être) le descripteur de l'opération à réaliser OP_DESC (hors de la partie métadonnées MD_I de la commande).

Dans une étape 603, le compteur intelligent 150 récupère, dans la commande reçue, (ce qui est supposé être) les métadonnées MD_I associées à la commande.

Dans une étape 604, le compteur intelligent 150 vérifie que les métadonnées MD_I récupérées à l'étape 603 (c'est-à-dire celles qui sont supposées inclure la copie du descripteur de l'opération à réaliser OP_DESC) sont conformes au descripteur de l'opération à réaliser OP_DESC récupéré à l'étape 602. En d'autres termes, le compteur intelligent 150 vérifie que la copie l'opération à réaliser OP_DESC dans les métadonnées MD_I récupérées à l'étape 603 est identique au descripteur de l'opération à réaliser OP_DESC récupéré à l'étape 602. Cela permet de vérifier que le descripteur de l'opération à réaliser OP_DESC n'a pas été altéré (uniquement) à l'un des deux endroits où il est inscrit ou copié dans la commande.

Puis, dans une étape 605, le compteur intelligent 150 teste si la vérification de l'étape 604 est positive. Lorsque les métadonnées MD_I récupérées à l'étape 603 ne sont pas conformes au descripteur de l'opération à réaliser OP_DESC récupéré à l'étape 602, le compteur intelligent 150 rejette la commande dans une étape 606. Sinon, dans une étape 607, le compteur intelligent 150 accepte la commande.

D'autres vérifications peuvent être réalisées par le compteur intelligent 150, notamment concernant les métadonnées MD_I. Par exemple, le compteur intelligent 150 peut vérifier que la date de la commande (métadonnées *« date-time »*) n'est pas trop ancienne par rapport à un seuil limite de temps écoulé. Aussi, le compteur intelligent 150 peut vérifier que l'identité cryptographique du signataire (métadonnées *« originator-system-title* ») et/ou identité cryptographique du destinataire (métadonnées *« recipient-system-title »*) sont conformes à des identités attendues.

Le procédé de vérification de la Fig. 6 est exécuté lorsque le dispositif gestionnaire 111 est supposé copier le descripteur d'opération à réaliser OP_DESC dans les métadonnées d'entrée MD_I. Sinon, le compteur intelligent 150 en question peut simplement effectuer des vérifications concernant la date de la commande et/ou l'identité cryptographique du signataire et/ou l'identité cryptographique du destinataire.

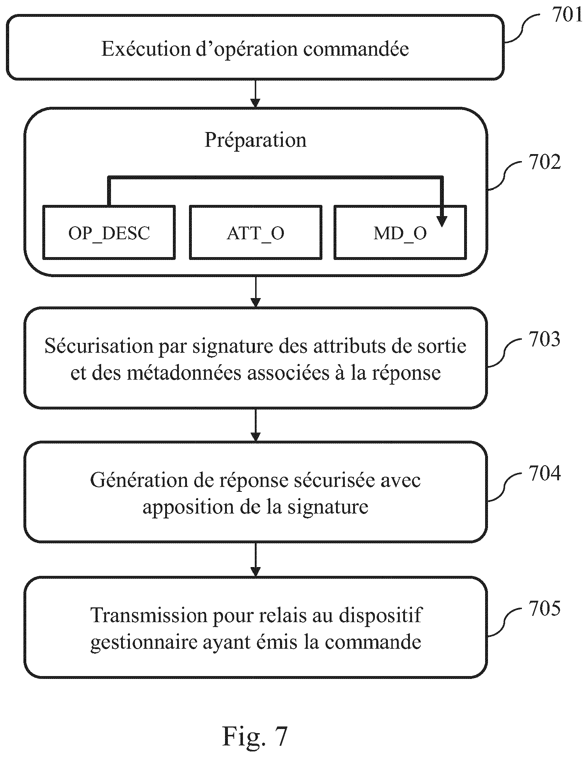

La **Fig. 7** illustre schématiquement un organigramme d'un procédé de formatage et de transmission d'une réponse à une commande qui a été initiée par le dispositif gestionnaire 111 à destination d'un dit compteur intelligent 150.

Dans une étape 701, le compteur intelligent 150 en question exécute l'opération commandée. Lorsque le dispositif gestionnaire 111 est supposé copier le descripteur d'opération à réaliser OP_DESC dans les métadonnées d'entrée MD_I, le compteur intelligent 150 en question exécute l'opération commandée après avoir exécuté le procédé de vérification de la Fig. 6 et avoir accepté la commande dans l'étape 607.

Dans une étape 702, le compteur intelligent 150 prépare la réponse à la commande. Le compteur intelligent 150 reprend le descripteur d'opération à réaliser OP_DESC qui avait été fourni dans la commande.

Le compteur intelligent 150 récupère des attributs de sortie ATT_O, et des métadonnées MD_O associées, à fournir au dispositif gestionnaire 111 en résultats d'exécution de la commande.

Les attributs de sortie ATT_O peuvent inclure un code de succès ou un code d'erreur au regard des résultats d'exécution de la commande.

Les attributs de sortie ATT_O peuvent inclure d'autres informations, comme par exemple une valeur de registre résultant de l'exécution de l'opération commandée. Par exemple, les attributs de sortie ATT_O reprennent un contenu de journal d'événements dont la lecture a été requise par ladite commande.

Le compteur intelligent 150 inclut, dans les métadonnées MD_O, le descripteur d'opération à réaliser OP_DESC qui avait été fourni dans la commande.

Préférentiellement, les métadonnées MD_O de la réponse incluent un numéro de transaction (métadonnées « *transaction-id »*) qui reprend un numéro de transaction qui avait été inclus dans les métadonnées MD_I de la commande correspondante, afin de permettre de déterminer à quelle commande la réponse correspond.

Dans un mode de réalisation particulier, le compteur intelligent 150 construit les métadonnées MD_O en recopiant les métadonnées MD_I (y compris le descripteur d'opération à réaliser OP_DESC, s'il y a été copié).

Dans une étape 703, le compteur intelligent 150 sécurise les attributs de sortie ATT_O et les métadonnées MD_O (y compris donc le descripteur d'opération à réaliser OP_DESC) par génération de la signature comme déjà décrit (chiffrement asymétrique avec la clef privé du compteur intelligent 150).

Dans une étape 704, le compteur intelligent 150 appose, à la réponse, la signature générée.

Dans une étape 705, le compteur intelligent 150 transmet la réponse ainsi sécurisée au concentrateur de données DC 120 pour relais jusqu'au dispositif gestionnaire 111.

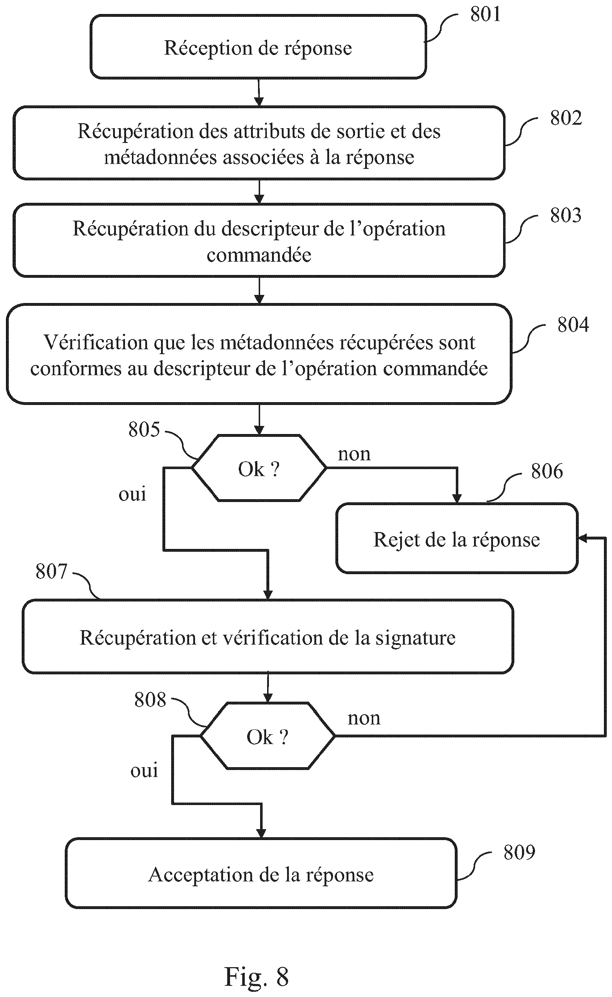

La **Fig. 8** illustre schématiquement un organigramme d'un procédé de vérification pour acception ou rejet d'une réponse reçue. La réponse a été générée et transmise selon le procédé décrit ci-dessus en relation avec la Fig. 7.

Dans une étape 801, le dispositif gestionnaire 111 reçoit la réponse en question.

Dans une étape 802, le dispositif gestionnaire 111 récupère, dans la réponse reçue, (ce qui est supposé être) les attributs de sortie ATT_O qui résultent de l'opération réalisée, ainsi que (ce qui est supposé être) les métadonnées MD_O associées à la réponse.

Dans une étape 803, le dispositif gestionnaire 111 récupère, en mémoire, le descripteur d'opération à réaliser OP_DESC qui avait été initialement transmis dans la commande à laquelle la réponse est supposée correspondre. Par exemple, les métadonnées MD_O de la réponse incluent un numéro de transaction qui est égal à un numéro de transaction qui avait été inclus dans les métadonnées MD_I de la commande correspondante, ce qui permet d'aisément retrouver quel est le descripteur OP_DESC en question.

Dans une étape 804, le dispositif gestionnaire 111 vérifie que les métadonnées MD_O récupérées à l'étape 802 correspondent au descripteur d'opération à réaliser OP_DESC récupéré à l'étape 803.

Puis, dans une étape 805, le dispositif gestionnaire 111 teste si la vérification de l'étape 804 est positive. Lorsque les métadonnées MD_O récupérées à l'étape 802 ne sont pas conformes au descripteur de l'opération à réaliser OP_DESC récupéré à l'étape 803, le dispositif gestionnaire 111 rejette la réponse dans une étape 806, ce qui met fin au procédé. En effet, cela signifie que le compteur intelligent 150 en question a réalisé une autre opération que celle souhaitée, ou que la réponse a été altérée en chemin. Le dispositif gestionnaire 111 ne peut donc pas faire confiance aux attributs de sortie ATT_O reçus. Sinon, une étape 807 est effectuée.

Dans l'étape 807, le dispositif gestionnaire 111 récupère, dans la réponse reçue, et vérifie, grâce à la clef publique du compteur intelligent 150 ayant transmis la réponse, que la signature est conforme avec les attributs de sortie ATT_O et les métadonnées MD_O, qui ont été récupérés à l'étape 803.

Puis, dans une étape 808, le dispositif gestionnaire 111 teste si la vérification de l'étape 807 est positive. Lorsque la signature est conforme avec les attributs de sortie ATT_O et les métadonnées MD_O, une étape 809 est effectuée. Sinon, l'étape 806 est effectuée.

Dans l'étape 809, le dispositif gestionnaire 111 accepte la réponse, en constatant que celle-ci n'a pas été altérée pendant son acheminement depuis le compteur intelligent 150 l'ayant émise. Les attributs de sortie ATT_O peuvent alors être exploités par le dispositif gestionnaire 111.

Par exemple, grâce à l'algorithme de la Fig. 8, le dispositif gestionnaire 111 peut vérifier qu'une commande de lecture de journal d'événements de sécurité a été réalisée conformément à ce qui était initialement demandé, sans altération. En effet, une modification en chemin d'un code OBIS qui spécifie l'opération à réaliser pourrait amener à retourner le contenu d'un autre journal d'événements amenant à, par exemple, conclure par erreur qu'aucun événement notable ne s'est produit.

D'autres vérifications peuvent être réalisées par le dispositif gestionnaire 111, notamment concernant les métadonnées MD_O. Par exemple, le dispositif gestionnaire 111 peut vérifier que la date de la réponse (métadonnées « *date-time »*) n'est pas trop ancienne par rapport à un seuil limite de temps écoulé. Aussi, le compteur intelligent 150 peut vérifier que l'identité cryptographique du signataire (métadonnées *« originator-system-title* ») et/ou identité cryptographique du destinataire (métadonnées « *recipient-system-title »*) sont conformes à des identités attendues.

Dans un mode de réalisation particulier, le procédé de la Fig. 8 est aussi implémenté par le concentrateur de données DC 120, dès lors que le concentrateur de données DC 120 a connaissance de la clef publique correspondant à la clef privée utilisée par le compteur intelligent 150 en question pour générer la signature. Ainsi, si le concentrateur de données DC 120 est un dispositif de confiance, cela permet de vérifier, avant de relayer la réponse au dispositif gestionnaire 111, que la réponse n'a pas été altérée sur l'interface I2 et de la rejeter sans la faire suivre au dispositif gestionnaire 111 le cas échéant.

## Revendications

1. Procédé de transmission d'une réponse à une commande reçue par un compteur intelligent (151, 152, 153) dans un système (100) de gestion automatisée, la commande reçue comportant un descripteur (OP_DESC) d'une opération à réaliser par ledit compteur intelligent (151, 152, 153), le procédé comportant les étapes suivantes exécutées par ledit compteur intelligent (151, 152, 153), après réalisation (701) de l'opération commandée, pour fournir la réponse à la commande reçue :
- récupérer des attributs (ATT_O) de sortie, et des métadonnées (MD_O) associées à la réponse, à fournir en résultats d'exécution de la commande reçue ;
- inclure (702), dans les métadonnées (MD_O) associées à la réponse, le descripteur (OP_DESC) d'opération à réaliser qui avait été fourni dans la commande reçue ;
- réaliser (703) une sécurisation qui génère une signature sur un ensemble de données formé par les attributs (ATT_O) de sortie et les métadonnées (MD_O) associées à la réponse ;
- transmettre (705), en réponse à la commande reçue, la réponse incluant les attributs (MD_O) de sortie, lesdites métadonnées (MD_O) associées incluant le descripteur d'opération à réaliser qui avait été fourni dans la commande reçue, et la signature générée.

2. Procédé selon la revendication 1, dans lequel la commande inclut en outre des métadonnées (MD_I) associées à la commande, incluant une copie du descripteur (OP_DESC) d'opération à réaliser, et dans lequel le compteur intelligent (151, 152, 153) vérifie (604) que le descripteur (OP_DESC) de l'opération à réaliser et sa copie dans les métadonnées (MD_I) associées à la commande reçue sont identiques, et lorsque tel n'est pas le cas, le compteur intelligent (151, 152, 153) rejette la commande reçue.

3. Procédé selon la revendication 2, dans lequel le compteur intelligent (151, 152, 153) construit les métadonnées (MD_O) associées à la réponse en recopiant les métadonnées (MD_I) associées à la commande reçue.

4. Procédé selon l'une quelconque des revendications 1 à 3, dans lequel le descripteur (OP_DESC) d'opération à réaliser contient un identifiant de l'opération à réaliser.

5. Procédé selon l'une quelconque des revendications 1 à 4, dans lequel la gestion automatisée des compteurs intelligents est opérée selon une modélisation orientée objet, le descripteur (OP_DESC) d'opération à réaliser contient un identifiant de classe d'au moins un objet manipulé pour réaliser l'opération en question.

6. Procédé selon la revendication 5, dans lequel la modélisation orientée objet est de type COSEM et la sécurisation qui génère la signature est obtenue par un objet de type DATA PROTECTION.

7. Procédé selon l'une quelconque des revendications 1 à 6, comportant en outre les étapes suivantes, sur réception (801) de la réponse, de vérification de la réponse exécutées par un dispositif gestionnaire (111) qui a transmis la commande audit compteur intelligent (151, 152, 153) :
- récupérer (802), dans la réponse reçue, les attributs (ATT_O) de sortie qui résultent de l'opération réalisée, ainsi que les métadonnées (MD_O) associées à la réponse ;
- récupérer (803) en mémoire le descripteur d'opération à réaliser qui avait été initialement transmis dans la commande à laquelle la réponse correspond ;
- vérifier (804) que les métadonnées (MD_O) récupérées dans la réponse correspondent au descripteur (OP_DESC) d'opération à réaliser récupéré en mémoire, et lorsque tel n'est pas le cas, rejeter la réponse ;
- récupérer (807) la signature, dans la réponse reçue, et vérifier que la signature est conforme avec les attributs (ATT_O) de sortie et les métadonnées (MD_O) associées à la réponse, qui ont été récupérés dans la réponse, et lorsque tel n'est pas le cas, rejeter la réponse, et sinon, accepter la réponse.

8. Procédé selon la revendication 7, dans lequel la vérification de la réponse est aussi exécutée par un concentrateur de données (120) agissant comme relais entre le dispositif gestionnaire (111) et le compteur intelligent en question (151, 152, 153) dans le système (100) de gestion automatisée.

9. Compteur intelligent (151, 152, 153) configuré pour traiter une commande reçue dans un système (100) de gestion automatisée, la commande reçue comportant un descripteur (OP_DESC) d'une opération à réaliser par le compteur intelligent, **caractérisé en ce que** le compteur intelligent (151, 152, 153) comporte de la circuiterie électronique configurée pour exécuter les étapes suivantes, après réalisation (701) de l'opération commandée, pour fournir la réponse à la commande reçue :
- récupérer des attributs (ATT_O) de sortie, et des métadonnées (MD_O) associées à la réponse, à fournir en résultats d'exécution de la commande reçue ;
- inclure (702), dans les métadonnées (MD_O) associées à la réponse, le descripteur (OP_DESC) d'opération à réaliser qui avait été fourni dans la commande reçue ;
- réaliser (703) une sécurisation qui génère une signature sur un ensemble de données formé par les attributs (ATT_O) de sortie et les métadonnées (MD_O) associées à la réponse ;
- transmettre (705), en réponse à la commande reçue, la réponse incluant les attributs (MD_O) de sortie, lesdites métadonnées (MD_O) associées incluant le descripteur d'opération à réaliser qui avait été fourni dans la commande reçue, et la signature générée.

10. Dispositif gestionnaire (111) comportant de la circuiterie électronique configurée pour effectuer une transmission d'une commande dans un système (100) de gestion automatisée, la commande comportant un descripteur (OP_DESC) d'opération à réaliser par un compteur intelligent (151, 152, 153), la circuiterie électronique étant configurée pour exécuter les étapes suivantes, sur réception (801) de la réponse, de vérification de la réponse :
- récupérer (802), dans la réponse reçue, des attributs (ATT_O) de sortie qui résultent d'une opération réalisée par le compteur intelligent (151, 152, 153) sur réception de la commande, ainsi que les métadonnées (MD_O) associées à la réponse ;
- récupérer (803) en mémoire le descripteur d'opération à réaliser qui avait été initialement transmis dans la commande ;
- vérifier (804) que les métadonnées (MD_O) récupérées dans la réponse correspondent au descripteur (OP_DESC) d'opération à réaliser récupéré en mémoire, et lorsque tel n'est pas le cas, rejeter la réponse ;
- récupérer (807) la signature, dans la réponse reçue, et vérifier que la signature est conforme avec les attributs (ATT_O) de sortie et les métadonnées (MD_O) associées à la réponse, qui ont été récupérés dans la réponse, et lorsque tel n'est pas le cas, rejeter la réponse, et sinon, accepter la réponse.

11. Système (100) de gestion automatisée de compteurs intelligents comportant un dispositif gestionnaire (111) selon la revendication 10 et des compteurs intelligents (151, 152, 153) selon la revendication 9.

12. Procédé implémenté par un dispositif gestionnaire (111) dans un système (100) de gestion automatisée, dans lequel le dispositif gestionnaire (111) effectue une transmission d'une commande comportant un descripteur (OP_DESC) d'opération à réaliser par un compteur intelligent (151, 152, 153), **caractérisé en ce que** le dispositif gestionnaire (111) exécute les étapes suivantes, sur réception (801) d'une réponse à la commande :
- récupérer (802), dans la réponse reçue, des attributs (ATT_O) de sortie qui résultent d'une opération réalisée par le compteur intelligent (151, 152, 153) sur réception de la commande, ainsi que les métadonnées (MD_O) associées à la réponse ;
- récupérer (803) en mémoire le descripteur d'opération à réaliser qui avait été initialement transmis dans la commande ;
- vérifier (804) que les métadonnées (MD_O) récupérées dans la réponse correspondent au descripteur (OP_DESC) d'opération à réaliser récupéré en mémoire, et lorsque tel n'est pas le cas, rejeter la réponse ;
- récupérer (807) la signature, dans la réponse reçue, et vérifier que la signature est conforme avec les attributs (ATT_O) de sortie et les métadonnées (MD_O) associées à la réponse, qui ont été récupérés dans la réponse, et lorsque tel n'est pas le cas, rejeter la réponse, et sinon, accepter la réponse.

13. Produit programme d'ordinateur comportant des instructions entraînant une implémentation, par un processeur, du procédé selon l'une quelconque des revendications 1 à 6 ou du procédé selon la revendication 12, lorsque les instructions sont exécutées par le processeur.

14. Support de stockage d'informations stockant des instructions entraînant une implémentation, par un processeur, du procédé selon l'une quelconque des revendications 1 à 6 ou du procédé selon la revendication 12, lorsque les instructions sont lues depuis le support de stockage d'informations et exécutées par le processeur.

## Patentansprüche

1. Verfahren zur Übertragung einer Reaktion auf einen von einem intelligenten Zähler (151, 152, 153) empfangenen Befehl in einem automatisierten Verwaltungssystem (100), wobei der empfangene Befehl einen Deskriptor (OP_DESC) einer Operation umfasst, die von dem intelligenten Zähler (151, 152, 153) durchgeführt werden soll, wobei das Verfahren die folgenden Schritte umfasst, die von dem intelligenten Zähler (151, 152, 153) nach Durchführung (701) der befohlenen Operation ausgeführt werden, um die Reaktion auf den empfangenden Befehl zu liefern:
- Abrufen der Ausgabeattribute (ATT_O) und der Metadaten (MD_O), die der Reaktion zugeordnet sind, die als Ausführungsergebnisse des empfangenen Befehls bereitzustellen sind;
- Einbeziehen (702) in die Metadaten (MD_O), die der Reaktion zugeordnet sind, des Deskriptors (OP_DESC) der durchzuführenden Operation, der in dem empfangenen Befehl geliefert wurde;
- Durchführen (703) einer Absicherung, die eine Signatur über einen Datensatz erzeugt, der aus den Ausgabeattributen (ATT_O) und den der Reaktion zugeordneten Metadaten (MD_O) gebildet wird;
- Übertragen (705), als Reaktion auf den empfangenen Befehl, der Reaktion, die die Ausgangsattribute (ATT_O) beinhaltet, wobei die zugeordneten Metadaten (MD_O) den Deskriptor der durchzuführenden Operation, die in dem empfangenen Befehl geliefert wurden, und die erzeugte Signatur beinhalten.

2. Verfahren nach Anspruch 1, wobei der Befehl ferner Metadaten (MD_I) beinhaltet, die dem Befehl zugeordnet sind, die eine Kopie des Deskriptors (OP_DESC) der durchzuführenden Operation beinhalten, und wobei der intelligente Zähler (151, 152, 153) überprüft (604), ob der Deskriptor (OP_DESC) der durchzuführenden Operation und deren Kopie in den Metadaten (MD_I), die dem empfangenden Empfehlung zugeordnet sind, identisch sind, und, wenn dies nicht der Fall ist, der intelligente Zähler (151, 152, 153) den empfangenen Befehl verwirft.

3. Verfahren nach Anspruch 2, wobei der intelligente Zähler (151, 152, 153) die Metadaten (MD_O), die der Reaktion zugeordnet sind, durch Kopieren der Metadaten (MD_I), die dem empfangenen Befehl zugeordnet sind, aufbaut.

4. Verfahren nach einem der Ansprüche 1 bis 3, wobei der Deskriptor (OP_DESC) der durchzuführenden Operation eine Kennung der durchzuführenden Operation enthält.

5. Verfahren nach einem der Ansprüche 1 bis 4, wobei die automatisierte Verwaltung der intelligenten Zähler gemäß einer objektorientierten Modellierung betrieben wird, wobei der Deskriptor (OP_DESC) der durchzuführenden Operation eine Klassenkennung mindestens eines manipulierten Objekts enthält, um die betreffende Operation durchzuführen.

6. Verfahren nach Anspruch 5, wobei die objektorientierte Modellierung vom Typ COSEM ist und die Absicherung, die die Signatur erzeugt, durch ein Objekt vom Typ DATA PROTECTION erhalten wird.

7. Verfahren nach einem der Ansprüche 1 bis 6, das außerdem bei Empfang (801) der Reaktion die folgenden Verifizierungsschritte der Reaktion umfasst, die von einer Verwaltungsvorrichtung (111), die den Befehl an den intelligenten Zähler (151, 152, 153) übertragen hat, ausgeführt werden:
- Abrufen (802), aus der empfangenen Reaktion, der Ausgangsattribute (ATT_O), die sich aus der durchgeführten Operation ergeben, sowie der Metadaten (MD_O), die der Reaktion zugeordnet sind;
- Abrufen (803), aus dem Speicher, des Deskriptors der durchzuführenden Operation, der anfänglich in dem Befehl, dem die Reaktion entspricht, übertragen wurde;
- Verifizieren (804), dass die aus der Reaktion abgerufenen Metadaten (MD_O) dem Deskriptor (OP_DESC) der durchzuführenden Operation, der aus dem Speicher abgerufen wurde, entsprechen, und wenn dies nicht der Fall ist, Verwerfen der Reaktion;
- Abrufen (807) der Signatur aus der empfangenen Reaktion und Verifizieren, dass die Signatur mit den Ausgangsattributen (ATT_O) und den Metadaten (MD_O), die der Reaktion zugeordnet sind, die aus der Reaktion abgerufen wurden, konform ist, und wenn dies nicht der Fall ist, Verwerfen der Reaktion und andernfalls Akzeptieren der Reaktion.

8. Verfahren nach Anspruch 7, wobei die Verifizierung der Reaktion auch von einem Datenkonzentrator (120) ausgeführt wird, der als Relais zwischen der Verwaltungsvorrichtung (111) und dem betreffenden intelligenten Zähler (151, 152, 153) in dem automatisierten Verwaltungssystem (100) fungiert.

9. Intelligenter Zähler (151, 152, 153), der zum Verarbeiten eines in einem automatisierten Verwaltungssystem (100) empfangenen Befehls konfiguriert ist, wobei der empfangene Befehl einen Deskriptor (OP_DESC) einer von dem intelligenten Zähler durchzuführenden Operation umfasst, **dadurch gekennzeichnet, dass** der intelligente Zähler (151, 152, 153) eine elektronische Schaltungsanordnung umfasst, die zum Ausführen der folgenden Schritte nach Durchführung (701) der befohlenen Operation konfiguriert ist, um die Reaktion auf den empfangenden Befehl zu liefern:
- Abrufen der Ausgabeattribute (ATT_O) und der Metadaten (MD_O), die der Reaktion zugeordnet sind, die als Ausführungsergebnisse des empfangenen Befehls bereitzustellen sind;
- Einbeziehen (702) in die Metadaten (MD_O), die der Reaktion zugeordnet sind, des Deskriptors (OP_DESC) der auszuführenden Operation, der in dem empfangenen Befehl geliefert wurde;
- Durchführen (703) einer Absicherung, die eine Signatur über einen Datensatz erzeugt, der aus den Ausgabeattributen (ATT_O) und den der Reaktion zugeordneten Metadaten (MD_O) gebildet wird;
- Übertragen (705), als Reaktion auf den empfangenen Befehl, der Reaktion, die die Ausgangsattribute (ATT_O) beinhaltet, wobei die zugeordneten Metadaten (MD_O) den Deskriptor der auszuführenden Operation, die in dem empfangenen Befehl geliefert wurde, und die erzeugte Signatur beinhalten.

10. Verwaltungsvorrichtung (111), die eine Schaltungsanordnung umfasst, die dazu konfiguriert ist, eine Übertragung eines Befehls in einem automatisierten Verwaltungssystem (100) durchzuführen, wobei der Befehl einen Deskriptor (OP_DESC) einer durch einen intelligenten Zähler (151, 152, 153) durchzuführenden Operation umfasst, wobei die elektronische Schaltungsanordnung dazu konfiguriert ist, bei Empfang (801) der Reaktion die folgenden Verifizierungsschritte der Reaktion auszuführen:
- Abrufen (802), aus der empfangenen Reaktion, der Ausgangsattribute (ATT_O), die sich aus einer Operation ergeben, die von dem intelligenten Zähler (151, 152, 153) bei Empfang des Befehls durchgeführt wurde, sowie der Metadaten (MD_O), die der Reaktion zugeordnet sind;
- Abrufen (803), aus dem Speicher, des Deskriptors der durchzuführenden Operation, der anfänglich in dem Befehl übertragen wurde;
- Verifizieren (804), ob die aus der Reaktion abgerufenen Metadaten (MD_O) dem Deskriptor (OP_DESC) der durchzuführenden Operation, der aus dem Speicher abgerufen wurde, entsprechen, und wenn dies nicht der Fall ist, Verwerfen der Reaktion;
- Abrufen (807) der Signatur aus der empfangenen Reaktion und Verifizieren, ob die Signatur mit den Ausgangsattributen (ATT_O) und den Metadaten (MD_O), die der Reaktion zugeordnet sind, die aus der Reaktion abgerufen wurden, konform ist, und wenn dies nicht der Fall ist, Verwerfen der Reaktion und andernfalls Akzeptieren der Reaktion.

11. System (100) zur automatisierten Verwaltung von intelligenten Zählern, das eine Verwaltungsvorrichtung (111) nach Anspruch 10 und intelligente Zähler (151, 152, 153) nach Anspruch 9 umfasst.

12. Verfahren, das von einer Verwaltungsvorrichtung (111) in einem System (100) zur automatisierten Verwaltung implementiert wird, wobei die Verwaltungsvorrichtung (111) eine Übertragung eines Befehls durchführt, der einen Deskriptor (OP_DESC) einer Operation zum Durchführen durch einen intelligenten Zähler (151, 152, 153) umfasst, **dadurch gekennzeichnet, dass** die Verwaltungsvorrichtung (111) die folgenden Schritte beim Empfang (801) Einnahmen Reaktion auf den Befehl ausführt:
- Abrufen (802), aus der empfangenen Reaktion, der Ausgangsattribute (ATT_O), die sich aus einer Operation ergeben, die von dem intelligenten Zähler (151, 152, 153) bei Empfang des Befehls durchgeführt wurde, sowie der Metadaten (MD_O), die der Reaktion zugeordnet sind;
- Abrufen (803), aus dem Speicher, des Deskriptors der durchzuführenden Operation, der anfänglich in dem Befehl übertragen wurde;
- Verifizieren (804), ob die aus der Reaktion abgerufenen Metadaten (MD_O) dem Deskriptor (OP_DESC) der durchzuführenden Operation, der aus dem Speicher abgerufen wurde, entsprechen, und wenn dies nicht der Fall ist, Verwerfen der Reaktion;
- Abrufen (807) der Signatur aus der empfangenen Reaktion und Verifizieren, dass die Signatur mit den Ausgangsattributen (ATT_O) und den Metadaten (MD_O), die der Reaktion zugeordnet sind, die aus der Reaktion abgerufen wurden, konform ist, und wenn dies nicht der Fall ist, Verwerfen der Reaktion und andernfalls Akzeptieren der Reaktion.

13. Computerprogrammprodukt, das Anweisungen umfasst, die eine Implementierung durch einen Prozessor des Verfahrens nach einem der Ansprüche 1 bis 6 oder des Verfahrens nach Anspruch 12 umfasst, wenn die Anweisungen von dem Prozessor ausgeführt werden.

14. Informationsspeichermedium, das Anweisungen speichert, die eine Implementierung durch einen Prozessor des Verfahrens nach einem der Ansprüche 1 bis 6 oder des Verfahrens nach Anspruch 12 nach sich ziehen, wenn die Anweisungen von dem Prozessor aus dem Informationsspeichermedium gelesen und ausgeführt werden.

## Claims

1. Method for transmitting a response to a command received by a smart meter (151, 152, 153) in an automated management system (100), the command received comprising a descriptor (OP_DESC) of an operation to be performed by said smart meter (151, 152, 153), the method comprising the following steps performed by said smart meter (151, 152, 153), after performance (701) of the operation demanded, to provide the response to the command received:
- recovering output attributes (ATT_O), and metadata (MD_O) associated with the response, to be supplied as results of the implementation of the command received;
- including (702), in the metadata (MD_O) associated with the response, the descriptor (OP_DESC) of the operation to be performed that had been supplied in the command received;
- implementing (703) a protection that generates a signature on a set of data formed by the output attributes (ATT_O) and the metadata (MD_O) associated with the response;
- transmitting (705), in response to the command received, the response including the output attributes (MD_O), said associated metadata (MD_O) including the descriptor of the operation to be performed that had been supplied in the command received, and the signature generated.

2. Method according to claim 1, wherein the command furthermore includes metadata (MD_I) associated with the command, including a copy of the descriptor (OP_DESC) of the operation to be performed, and wherein the smart meter (151, 152, 153) verifies (604) that the descriptor (OP_DESC) of the operation to be performed and the copy thereof in the metadata (MD_I) associated with the command received are identical and, when such is not the case, the smart meter (151, 152, 153) rejects the command received.

3. Method according to claim 2, wherein the smart meter (151, 152, 153) constructs the metadata (MD_O) associated with the response by copying the metadata (MD_I) associated with the command received.

4. Method according to any one of claims 1 to 3, wherein the descriptor (OP_DESC) of the operation to be performed contains an identifier of the operation to be performed.

5. Method according to any one of claims 1 to 4, wherein the automated management of smart meters is implemented in accordance with an object-oriented modelling, the descriptor (OP_DESC) of the operation to be performed contains a class identifier of at least one object manipulated to perform the operation in question.

6. Method according to claim 5, wherein the object-oriented modelling is of the COSEM type and the protection that generates the signature is obtained by an object of the DATA PROTECTION type.

7. Method according to any one of claims 1 to 6, furthermore comprising the following steps, on reception (801) of the response, of verifying the response, performed by a management device (111) that transmitted the command to said smart meter (151, 152, 153):
- recovering (802), in the response received, the output attributes (ATT_O) that result from the operation performed, as well as the metadata (MD_O) associated with the response;
- recovering (803) in memory the descriptor of the operation to be performed that had initially been transmitted in the command to which the response corresponds;
- verifying (804) that the metadata (MD_O) recovered in the response correspond to the descriptor (OP_DESC) of the operation to be performed recovered in memory, and, when such is not the case, rejecting the response;
- recovering (807) the signature, in the response received, and verifying that the signature conforms to the output attributes (ATT_O) and the metadata (MD_O) associated with the response, which were recovered in the response, and, when such is not the case, rejecting the response, and otherwise accepting the response.

8. Method according to claim 7, wherein the verification of the response is also implemented by a data concentrator (120) acting as a relay between the management device (111) and the smart meter in question (151, 152, 153) in the automated management system (100).

9. Smart meter (151, 152, 153) configured to process a command received in an automated management system (100), the command received comprising a descriptor (OP_DESC) of an operation to be performed by the smart meter, **characterised in that** the smart meter (151, 152, 153) comprises electronic circuitry configured to perform the following steps, after performance (701) of the operation demanded, to provide the response to the command received:
- recovering output attributes (ATT_O), and metadata (MD_O) associated with the response, to be supplied as results of the implementation of the command received;
- including (702), in the metadata (MD_O) associated with the response, the descriptor (OP_DESC) of the operation to be performed that had been supplied in the command received;
- implementing (703) a protection that generates a signature on a set of data formed by the output attributes (ATT_O) and the metadata (MD_O) associated with the response;
- transmitting (705), in response to the command received, the response including the output attributes (MD_O), said associated metadata (MD_O) including the descriptor of the operation to be performed that had been supplied in the command received, and the signature generated.

10. Management device (111) comprising electronic circuitry configured to implement a transmission of a command in an automated management system (100), the command comprising a descriptor (OP_DESC) of the operation to be performed by a smart meter (151, 152, 153), the electronic circuitry being configured to perform the following steps, on reception (801) of the response, of verifying the response:
- recovering (802), in the response received, output attributes (ATT_O) that result from an operation performed by the smart meter (151, 152, 153) on reception of the command, as well as the metadata (MD_O) associated with the response;
- recovering (803) in memory the descriptor of the operation to be performed that had initially been transmitted in the command;
- verifying (804) that the metadata (MD_O) recovered in the response correspond to the descriptor (OP_DESC) of the operation to be performed recovered in memory, and, when such is not the case, rejecting the response;
- recovering (807) the signature, in the response received, and verifying that the signature conforms to the output attributes (ATT_O) and the metadata (MD_O) associated with the response, which were recovered in the response, and, when such is not the case, rejecting the response, and otherwise accepting the response.

11. System (100) for automated management of smart meters comprising a management device (111) according to claim 10 and smart meters (151, 152, 153) according to claim 9.

12. Method implemented by a management device (111) in an automated management system (100), wherein the management device (111) makes a transmission of a command comprising a descriptor (OP_DESC) of an operation to be performed by a smart meter (151, 152, 153), **characterised in that** the management device (111) performs the following steps, on reception (801) of a response to the command:
- recovering (802), in the response received, output attributes (ATT_O) that result from an operation performed by the smart meter (151, 152, 153) on reception of the command, as well as the metadata (MD_O) associated with the response;
- recovering (803) in memory the descriptor of the operation to be performed that had initially been transmitted in the command;
- verifying (804) that the metadata (MD_O) recovered in the response correspond to the descriptor (OP_DESC) of the operation to be performed recovered in memory, and, when such is not the case, rejecting the response;
- recovering (807) the signature, in the response received, and verifying that the signature conforms to the output attributes (ATT_O) and the metadata (MD_O) associated with the response, which were recovered in the response, and, when such is not the case, rejecting the response, and otherwise accepting the response.

13. Computer program product comprising instructions causing an implementation, by a processor, of the method according to any one of claims 1 to 6 or of the method according to claim 12, when the instructions are executed by the processor.

14. Information-storage medium storing instructions causing an implementation, by a processor, of the method according to any one of claims 1 to 6 or of the method according to claim 12, when the instructions are read from the information-storage medium and executed by the processor.
